(19) Europäisches Patentamt
European Patent Office
Office européen des brevets

(11) **EP 2 091 856 B1**

(12) **EUROPÄISCHE PATENTSCHRIFT**

(45) Veröffentlichungstag und Bekanntmachung des Hinweises auf die Patenterteilung:
**08.08.2012   Patentblatt 2012/32**

(51) Int Cl.:
***B66C 13/06*** *(2006.01)*      ***B25J 9/16*** *(2006.01)*

(21) Anmeldenummer: **07822376.5**

(22) Anmeldetag: **08.11.2007**

(86) Internationale Anmeldenummer:
**PCT/EP2007/062074**

(87) Internationale Veröffentlichungsnummer:
**WO 2008/055956 (15.05.2008 Gazette 2008/20)**

(54) **VERFAHREN UND VORRICHTUNG ZUM BEWEGEN EINER FREISCHWINGENDEN LAST VON EINEM START- ZU EINEM ZIELPUNKT**

METHOD AND APPARATUS FOR MOVING A FREE-SWINGING LOAD FROM A STARTING POINT TO A TARGET POINT

PROCÉDÉ ET DISPOSITIF POUR DÉPLACER UNE CHARGE OSCILLANT LIBREMENT D'UN POINT DE DÉPART À UN POINT D'ARRIVÉE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.11.2006   DE 102006052956**

(43) Veröffentlichungstag der Anmeldung:
**26.08.2009   Patentblatt 2009/35**

(73) Patentinhaber: **KUKA Roboter GmbH
86165 Augsburg (DE)**

(72) Erfinder: **ZIMMERMANN, Uwe
86152 Augsburg (DE)**

(74) Vertreter: **Patentanwälte
Funk & Böss GbR
Sigmundstraße 1
80538 München (DE)**

(56) Entgegenhaltungen:
**EP-A- 0 562 124      JP-A- 2 132 097
JP-A- 11 240 687      JP-A- 11 301 969
US-A- 4 997 095**

**Beschreibung**

Die vorliegende Erfindung betrifft ein Verfahren und eine Vorrichtung zum Bewegen einer freischwingenden Last von einem Start- zu einem Zielpunkt gemäß dem Oberbegriff des Anspruchs 1 bzw. Ansprüche 5 und 6, wie z.B. aus der JP 11 240687 bekannt.

Stand der Technik

Beispielsweise im Bereich des Materialhandlings oder im Bereich der Logistik kann ein Roboter eine bezüglich eines Aufhängungspunktes des Roboters freischwingende Last transportieren. Beispielsweise durch Beschleunigungen während des Transports kann die Last in Schwingungen versetzt werden, sodass diese insbesondere noch schwingt, wenn der Roboter bzw. der Aufhängungspunkt seinen Zielpunkt erreicht hat. Dadurch wird ein nach Erreichen des Zielpunktes unmittelbares gezieltes Absetzen der Last zumindest erschwert oder gar unmöglich. Um ein gezieltes Absetzen zu ermöglichen, kann gewartet werden, bis die Last ausreichend wenig schwingt.

Um Schwingungen der Last während des Transports zu dämpfen, offenbart die DE 42 38 795 A1 nahe einer pendelnden Last einen Drehachsen- oder Beschleunigungssensor zum Messen der Winkelgeschwindigkeit oder des Neigungswinkels der Last bezüglich eines erdoberflächenfesten Koordinatensystems anzuordnen. Aufgrund der gemessenen momentanen Winkelgeschwindigkeit bzw. des gemessenen momentanen Neigungswinkels der Last wird deren Aufhängungspunkt oder die Länge eines Seils, mit der die Last am Aufhängungspunkt freischwingend aufgehängt ist, zur Dämpfung der Schwingung verändert. Somit wird aufgrund der gemessenen Werte des Drehachsen- oder Beschleunigungssensors eine relativ komplizierte Regelung mit einer Rückkopplungsschleife für den Aufhängungspunkt realisiert, deren Performance insbesondere von der Qualität der Sensorsignale abhängt.

Die DE 102 23 670 A1 offenbart ein Verfahren zum Betreiben eines Roboters, der ein mit einer Hand des Roboters verbundenes Greifwerkzeug umfasst. Mit dem Greifwerkzeug kann der Roboter einen Gegenstand heben und von einem Start- zu einem Zielpunkt transportieren. Um ein während des Transports des Gegenstandes durch Beschleunigungen hervorgerufenes Abreißen des Gegenstandes vom Greifwerkzeug zu vermeiden, dreht der Roboter während des Transports des Gegenstandes seine Hand derart, dass zwischen dem Gegenstand und dem Greifwerkzeug im Wesentlichen lediglich Normalkräfte zwischen dem Gegenstand und dem Greifwerkzeug wirken.

Die JP 11 301969 und die EP 0 562 124 A1 offenbaren jeweils einen Kran, der eine frei schwingende Last von einem Punkt zu einem anderen transportiert. Um ein Schwingen der Last zumindest zu verringern, sind Dämpfungsregelverfahren vorgesehen.

Die JP 11 240687 offenbart einen Kran, der eine frei schwingende Last von einem Punkt zu einem anderen entlang einer Bahnkurve transportiert. Um ein Schwingen der Last zumindest zu verringern, ist ein Dämpfungsregelverfahren vorgesehen.

Offenbarung der Erfindung

Aufgabe der vorliegenden Erfindung ist es, ein verbessertes Verfahren und eine vereinfachte Vorrichtung zum Bewegen einer freischwingenden Last von einem Start- zu einem Zielpunkt derart auszuführen, dass die Last den Zielpunkt möglichst schwingungsfrei erreicht.

Die Aufgabe der Erfindung wird gelöst durch ein Verfahren zum Bewegen einer freischwingenden Last, aufweisend folgende Verfahrensschritte:

- Festlegen einer ersten Bahnkurve, auf der eine Last von einem Startpunkt zu einem Zielpunkt bewegt werden soll, wobei die Last bezüglich eines beweglichen Aufhängepunktes in einem vorgegebenen Abstand freischwingend aufgehängt ist,
- Ermitteln einer zweiten Bahnkurve, auf der sich der Aufhängepunkt bewegen soll, derart, dass die Last sich entlang der ersten Bahnkurve vom Startpunkt zum Zielpunkt bewegt, und
- Bewegen des Aufhängepunkts, an dem die Last freischwingend aufgehängt ist, entlang der ermittelten zweiten Bahnkurve.

Gemäß dem erfindungsgemäßen Verfahrens soll die Last auf der ersten Bahnkurve vom Startpunkt zum Zielpunkt bewegt werden. Unter einer Bahnkurve, die auch als Trajektorie bezeichnet wird, versteht man allgemein eine Ortsraumkurve, entlang der sich ein Körper bzw. dessen Schwerpunkt mit einer bestimmten ortsabhängigen Geschwindigkeit bewegt.

Die Last ist gemäß dem erfindungsgemäßen Verfahren bezüglich des Aufhängepunktes in einem vorgegebenen Abstand freischwingend befestigt. Die bezüglich des Aufhängepunktes freischwingende Last ergibt somit ein Pendel mit einer insbesondere konstanten Pendellänge, die dem Abstand zwischen der Last und dem Aufhängepunkt entspricht. Die Last ist beispielsweise in dem vorgegebenen Abstand mittels eines Seils, einer Kette oder eines Stabes beweglich am Aufhängepunkt aufgehängt. Wird die Last aus ihrer vertikalen Ruhelage ausgelenkt, dann schwingt sie unter dem Einfluss der Schwerkraft zurück. Die Last kann auch durch eine Beschleunigung während der Bewegung entlang der ersten Bahnkurve in Schwingungen versetzt werden.

Damit die Last entlang der vorgegebenen ersten Bahnkurve vom Startpunk zum Zielpunkt bewegt wird, muss sich der Aufhängepunkt, bezüglich dessen die Last freischwingend befestigt ist, auf der zweiten Bahnkurve bewegen. Diese wird erfindungsgemäß z.B. vor oder während der Bewegung der Last derart ermittelt, dass sich die Last während ihrer Bewegung entlang der ersten Bahnkurve bewegt. Ist dies der Fall, dann wirken keine Kräfte quer zur Verbindungsstrecke zwischen der Last und dem Aufhängungspunkt, weshalb die Last während ihrer Bewegung auch nicht in Schwingungen versetzt werden kann und demnach ihren Zielpunkt schwingungsfrei erreicht.

Die zweite Bahnkurve kann nach einer Ausführung des erfindungsgemäßen Verfahrens gemäß folgender Verfahrensschritte ermittelt werden:

- Ermitteln der auf die Last wirkenden Beschleunigungen während der Bewegung vom Startpunkt zum Zielpunkt der Last entlang der ersten Bahnkurve aufgrund der momentanen Geschwindigkeiten der Last während der Bewegung und aufgrund der Masse der Last,
- Ermitteln von Winkelstellungen der Last bezüglich des Aufhängepunktes aufgrund der ermittelten Beschleunigungen und
- Ermitteln der zweiten Bahnkurve durch Ermitteln derjenigen Positionen des Aufhängepunktes im Raum, sodass die Last die ermittelten Winkelstellungen bezüglich des Aufhängepunkts während der Bewegung aufweist.

Sowohl die Länge der Verbindungsstrecke zwischen der Last und dem Aufhängepunkt als auch die momentane Position der Last während der geplanten Bewegung entlang der ersten Bahnkurve sind bekannt. Somit lässt sich mittels der berechneten Winkelstellung die Position des Aufhängepunktes im Raum relativ zur momentanen Position der Last errechnen. Wird diese Berechnung für jede Position der Last während ihrer Bewegung längs der ersten Bahnkurve durchgeführt, so ergibt dies die zweite Bahnkurve.

Werden die Winkelstellungen der Last bezüglich des Aufhängepunktes in einem kartesischen Koordinatensystem mit den horizontalen Koordinaten $x$ und $y$ und der vertikalen Koordinate $z$ ermittelt, dann können die Winkelstellungen nach einer Variante des erfindungsgemäßen Verfahrens gemäß folgender Formeln ermittelt werden:

$$\theta_x(t) = Arctan\left(\frac{a_x(t)}{g + a_z(t)}\right)$$

$$\theta_y(t) = Arctan\left(\frac{a_y(t)}{g + a_z(t)}\right)$$

wobei $a_x$, $a_y$ und $a_z$ die Beschleunigungen der Last bezüglich der $x$-Koordinate, der $y$-Koordinate und der $z$-Koordinate und $g$ die Erdbeschleunigung sind.

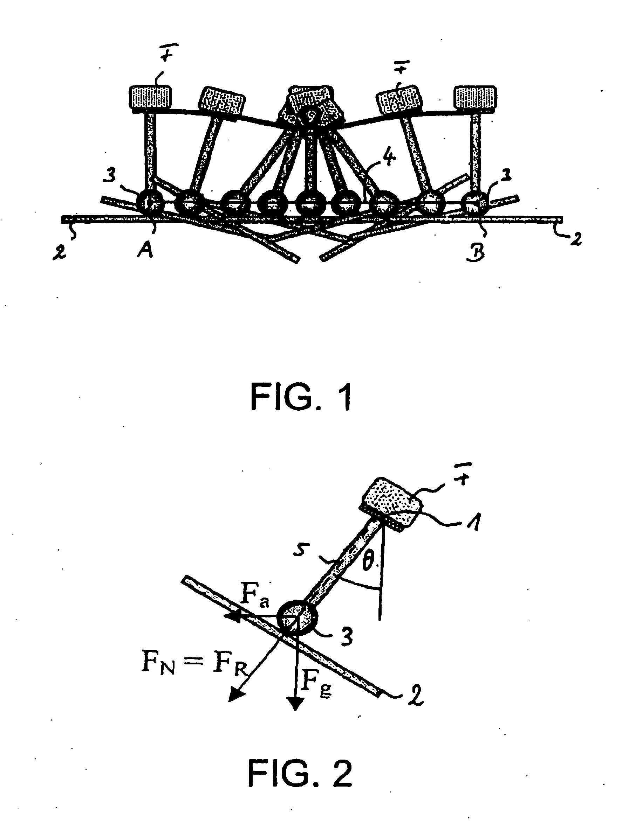

Das erfindungsgemäße Verfahren geht von folgendem, in den Figuren 1 und 2 veranschaulichtem Gedankenexperiment aus:

An einem Aufhängepunkt 1 eines Manipulators, beispielsweise eines Flansches F eines Roboters, wird ein in der Fig. 1 dargestelltes Haltetablett 2 an einem Ort A in horizontaler Ausrichtung und in einem vorbestimmten Abstand L zum Aufhängepunkt 1 angebracht. Das Haltetablett 2 ist nicht freischwingend bezüglich des Aufhängepunktes 1 bzw. des Flansches F angebracht und kann bezüglich des Aufhängepunktes 1 durch Drehen des Flansches F gekippt werden.

Auf dem Haltetablett 2 wird nun am Ort A eine Last 3 mit einer Masse m zentral unter dem Aufhängepunkt 1 gelegt. Die Last 3 soll nun mit dem Haltetablett 2 für das Gedankenexperiment horizontal vom Ort A zu einem Ort B transportiert werden.

Während des Transports der Last 3, also während der Bewegung der Last 3 vom Ort A zum Ort B entlang einer Ortsraumkurve 4, wirkt an jedem Punkt der Ortsraumkurve 4 eine resultierende Kraft $F_R$ auf die Last 3, wie dies in der Fig. 2 veranschaulicht ist. Die resultierende Kraft $F_R$ setzt sich aus einer Trägheitskraft $F_a$ und der Schwerkraft $F_g$ der Last 3 zusammen. Die Trägheitskraft $F_a$ entsteht durch eine die Bewegung bedingende Beschleunigung $a$ und wirkt in horizontaler Richtung und die Schwerkraft $F_g$ geht auf die Erdbeschleunigung $g$ zurück und wirkt in vertikaler Richtung.

Nun ist es möglich, das Haltetablett 2 derart zu kippen, dass die an die Last 3 angreifende resultierende Kraft $F_R$ lediglich eine Normalkomponente $F_N$ aufweist, d.h. dass die resultierende Kraft $F_R$ nur in der Richtung der Verbindungsstrecke 5 zwischen der Last 3 und dem Aufhängepunkt 1 wirkt und somit die resultierende Kraft $F_R$ rechtwinklig zum Haltetablett 2 ausgerichtet wird. Um diese Bedingung zu erhalten, muss das Haltetablett 2 um einen Kippwinkel θ zwischen der Verbindungsstrecke 5 und der Ausrichtung der Schwerkraft $F_g$ gekippt werden, wie dies in de Fig. 2 veranschaulicht ist.

Wird ein kartesisches Koordinatensystem mit den horizontalen Koordinaten $x$ und $y$ und der vertikalen Koordinate $z$ zugrunde gelegt, dann hat der Kippwinkel θ eine Winkelkomponente $θ_x$ bezüglich der $x$-Koordinate und eine Winkelkomponente $θ_y$ bezüglich der $y$-Koordinate. Die beiden Winkelkomponenten berechnen sich dann wie folgt:

$$\theta_x(t) = Arctan\left(\frac{a_x(t)}{g + a_z(t)}\right)$$

$$\theta_y(t) = Arctan\left(\frac{a_y(t)}{g + a_z(t)}\right)$$

wobei $a_x(t)$ die horizontal und in $x$-Richtung wirkende Beschleunigungskomponente, $a_y(t)$ die horizontal und in y-Richtung wirkende Beschleunigungskomponente und $a_z(t)$ die vertikal wirkende Beschleunigungskomponente der durch die Bewegung der Last 3 bedingten Beschleunigung $a(t)$ ist.

Wird das Haltetablett 2 während der Bewegung der Last 3 stets entsprechend den eben angeführten Bedingungen gekippt, dann wirken auf die Last 3 bezogen auf das Haltetablett 2 keine Querkräfte und die Last 3 bewegt sich bezüglich des Haltetabletts 2 nicht.

Wird nun die Last 3 freischwebend im Abstand L am Aufhängepunkt 1 befestigt, so ergibt dies im Wesentlichen ein Pendel mit einer Pendellänge gleich dem Abstand L und der Masse m der Last 3. "Setzt" man einen Beobachter im Rahmen des Gedankenexperiments in das beschleunigte Bezugssystem des Haltetabletts 2, so kann man folgendes beobachten: Auf das Pendel bzw. auf die Last 3 und den Beobachter wirken relativ zum Haltetablett 2 keine Querkräfte. Das Pendel bzw. die Last 3 scheinen für den Beobachter still zu stehen. Da das Haltetablett 2 ferner am Zielpunkt (Ort. B) wieder horizontal zum stehen kommt, wird sich das Pendel bzw. die Last 3 ebenfalls am Zielpunk (Ort B) in Ruhe befinden.

Somit lässt es sich mit dem erfindungsgemäßen Verfahren erreichen, dass die nun bezüglich des Aufhängepunktes 1 freischwingende Last 3 den Zielpunkt (Ort B) im Wesentlichen schwingungsfrei erreicht. Dies gilt nicht nur für horizontal verlaufende erste Bahnkurven, sondern für beliebig verlaufende erste Bahnkurven. Demnach kann die erste Bahnkurve lediglich horizontale Bewegungskomponenten, wie dies für das Gedankenexperiment der Fall ist, oder horizontale und vertikale Bewegungskomponenten bezüglich der Erdoberfläche aufweisen.

Im Gegensatz zu gewöhnlichen Verfahren wird die Bewegung des Aufhängepunktes gemäß dem erfindungsgemäßen Verfahrens nicht geregelt, wodurch der aktuelle Ist-Zustand der Last während ihrer Bewegung während der Bewegung nicht ermittelt werden muss. Dadurch benötigt man für das erfindungsgemäße Verfahren auch keine Sensorik.

Die Ermittlung der zweiten Bahnkurve, auf der sich der Aufhängepunkt bewegt, insbesondere aus den Beschleunigungen der translatorischen Bewegung der Last kann weniger komplex ausgeführt werden als übliche Mehrgrößenregelung. Dies wirkt sich positiv auf die benötigte Rechenleistung für die Ermittlung der zweiten Bahnkurve aus.

Die Aufgabe der Erfindung wird auch gelöst durch eine Vorrichtung zum Bewegen einer freischwingenden Last, aufweisend

- eine Haltevorrichtung zum freischwingenden Aufhängen einer Last bezüglich eines Aufhängepunktes,
- eine Eingabevorrichtung zum Eingeben des Verlaufs einer ersten Bahnkurve mit, auf der sich die an der Haltevorrichtung freischwingend befestigte Last von einem Startpunk zu einem Zielpunkt mit einer ersten ortsabhängigen Geschwindigkeit bewegen soll,
- Mittel zum Bewegen der Haltevorrichtung in wenigstens drei Freiheitsgraden,
- eine Steuervorrichtung, die die Mittel zum Bewegen der Haltevorrichtung derart ansteuert, dass sich die Haltevorrichtung auf einer durch die Steuervorrichtung vorgegebenen zweiten Bahnkurve mit einer zweiten ortsabhängigen Geschwindigkeit bewegt, und
- eine Rechenvorrichtung, die aufgrund der ersten Bahnkurve den Verlauf der zweiten Bahnkurve derart berechnet, dass sich die Last entlang der ersten Bahnkurve vom Startpunkt zum Zielpunkt bewegt.

Mit der erfindungsgemäßen Vorrichtung, die beispielsweise ein Roboter ist, kann das erfindungsgemäße Verfahren durchgeführt werden.

Die erste Bahnkurve für die zu bewegende Last kann mit der Eingabevorrichtung, z.B. einer Tastatur, einer Maus oder einem Touchscreen, eingegeben werden. Alternativ kann die erste Bahnkurve auch von der Rechenvorrichtung berechnet werden (automatische Bahnberechnung). Aufgrund des Verlaufs der gewünschten ersten Bahnkurve berechnet die Rechenvorrichtung bzw. ein geeignetes auf der Rechenvorrichtung laufendes Rechenprogramm die zweite Bahnkurve im Wesentlichen gemäß dem erfindungsgemäßen Verfahren.

Die Haltevorrichtung für die freischwingende Last ist z.B. ein Roboterflansch, der mittels der Mittel zum Bewegen der

Die Haltevorrichtung für die freischwingende Last ist z.B. ein Roboterflansch, der mittels der Mittel zum Bewegen der Haltevorrichtung für die Bewegung der Last auf der berechneten zweiten Bahnkurve bewegt wird. Die Mittel zum Bewegen der Haltevorrichtung werden von der Steuervorrichtung angesteuert, die z.B. ein Rechner ist.

Nach einer Ausführungsform der erfindungsgemäßen Vorrichtung ist die Rechenvorrichtung derart eingerichtet, dass sie auf die Last wirkende Beschleunigungen während der Bewegung vom Startpunkt zum Zielpunkt der Last entlang der ersten Bahnkurve aufgrund der momentanen Geschwindigkeiten der Last während der Bewegung berechnet, Winkelstellungen der Last bezüglich des Aufhängepunktes aufgrund der berechneten Beschleunigungen ermittelt und die zweite Bahnkurve durch Ermitteln derjenigen Positionen des Aufhängepunktes im Raum berechnet, sodass die Last die ermittelten Winkelstellungen bezüglich des Aufhängepunkts während der Bewegung aufweist.

Die Rechenvorrichtung kann insbesondere die Winkelstellungen der Last bezüglich des Aufhängepunktes in einem kartesischen Koordinatensystem mit den horizontalen Koordinaten $x$ und $y$ und der vertikalen Koordinate $z$ gemäß folgender Formeln ermittelt:

$$\theta_x(t) = Arctan\left(\frac{a_x(t)}{g + a_z(t)}\right)$$

$$\theta_y(t) = Arctan\left(\frac{a_y(t)}{g + a_z(t)}\right)$$

wobei $a_x$, $a_y$ und $a_z$ die Beschleunigungen der Last bezüglich der x-Koordinate, der y-Koordinate und der z-Koordinate und g die Erdbeschleunigung sind.

Nach Varianten der erfindungsgemäßen Vorrichtung ist diese derart eingerichtet, dass die erste Bahnkurve lediglich horizontale Bewegungskomponenten oder horizontale und vertikale Bewegungskomponenten bezüglich der Erdoberfläche aufweist.

Als sogenannten Tool-Center-Point (TCP) des Roboters wird ein Koordinatensystem bezeichnet, das in der Mitte des Flansches liegt. Aufgrund der drei Freiheitsgrade kann der TCP im Raum in den drei Raumrichtungen X, Y und Z entsprechend den Koordinaten x, y und z translatorisch bewegt werden. Außerdem kann der Flansch in der Regel auch in den drei Orientierungen C, B und A um die Raumrichtungen X, Y und Z rotatorisch gedreht werden. Die drei Raumrichtungen und die drei Orientierungen bilden die sogenannte Pose des Flansches bzw. des TCP.

Ein Vorteil des erfindungsgemäßen Verfahrens bzw. der erfindungsgemäßen Vorrichtung ist es, dass zur Ermittlung der zweiten Bahnkurve nur die drei Raumrichtungen des TCP maßgeblich sind und die Orientierungen C, B und A keinen Einfluss haben. Dies kann insbesondere zu einer relativ einfachen und relativ schnellen Ermittlung bzw. Berechnung der zweiten Bahnkurve führen.

Die Mittel zum Bewegen der Haltevorrichtung der erfindungsgemäßen Vorrichtung können insbesondere vier, fünf, sechs oder sieben Freiheitsgrade aufweisen.

Insbesondere wenn die Mittel zum Bewegen der Haltevorrichtung sechs Freiheitsgrade aufweisen, ergibt sich eine Redundanz bezüglich des Aufhängepunktes. Ein Beispiel einer erfindungsgemäßen Vorrichtung dieser Variante ist ein 6-Achs Roboter. Somit ist es möglich, Optimierungsstrategien, wie z.B. Zeitoptimierung, Vermeidung von Singularitäten oder Achsenbegrenzungen, bei der Ermittlung der Bewegung der Last zu ermitteln, da die Ermittlung der beiden Bahnkurven off-line erfolgen kann. Dies ist bei gewöhnlichen regelungsbasierten Verfahren nicht möglich, da diese on-line die Roboterbewegung ermitteln.

Da das Verhalten der Kinematik deterministisch bestimmt werden kann, ist eine kollisionsfreie Bahnplanung mit dem erfindungsgemäßen Verfahren möglich.

Kurze Beschreibung der Zeichnungen

Ein Ausführungsbeispiel der Erfindung ist in den beigefügten schematischen Zeichnungen exemplarisch dargestellt. Es zeigen:

Figs. 1 und 2      Szenarien zur Veranschaulichung des Zustandekommens der vorliegenden Erfindung,

Fig. 3      einen 6-Achs Roboter mit einer Haltevorrichtung zum freischwingenden Aufhängen einer Last bezüglich eines Aufhängepunktes,

Fig. 4      eine Bahnkurve des Aufhängepunktes und

Fig. 5      ein Flussdiagramm.

Ausführungsform der Erfindung

Die Figuren 1 und 2 wurden bereits obenstehend beschrieben.

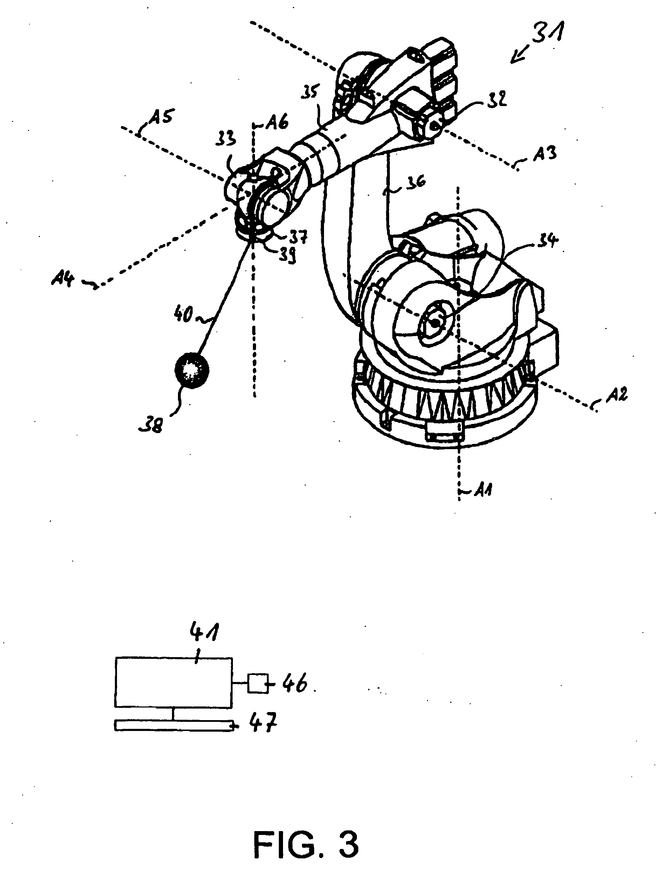

Die Fig. 3 zeigt ein Handhabungsgerät in Form eines 6-Achs Roboters 31 mit einer Kinematik für Bewegungen in sechs Freiheitsgraden. Der 6-Achs Roboter 31 weist in allgemein bekannter Weise Gelenke 32 bis 34, Hebel 35, 36 und nicht dargestellte Antriebe, sowie sechs Bewegungsachsen A1 bis A6 auf. Des Weiteren umfasst der 6-Achs Roboter 31 eine Haltevorrichtung 37 zum freischwingenden Aufhängen einer Last 38 bezüglich eines Aufhängepunktes 39. Im Falle des vorliegenden Ausführungsbeispiels ist die Last 38 mittels eines Seils 40 an der Haltevorrichtung 37 freischwingend aufgehängt. Das Seil 40 hat eine Länge L und die Last 38 hat eine Masse m.

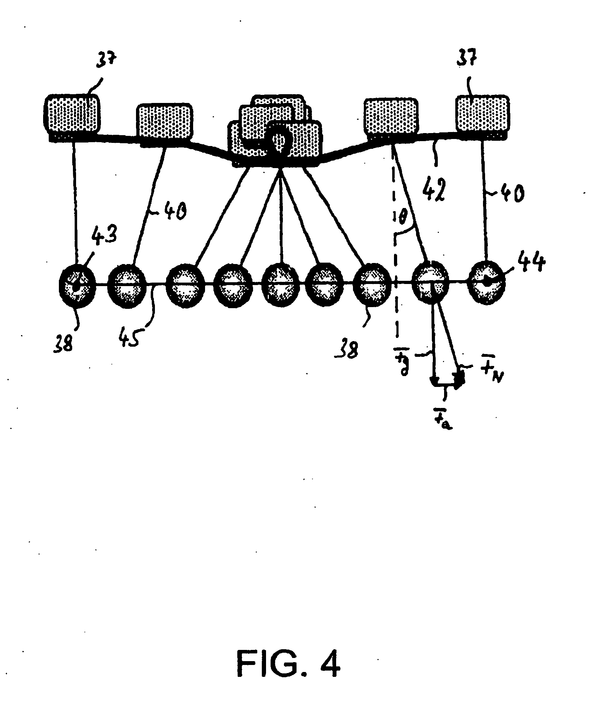

Die nicht dargestellten Antriebe, die z.B. elektrische Antriebe sind, sind in nicht dargestellter Weise mit einem Rechner 41 verbunden, der die Antriebe derart ansteuert, dass sich die Haltevorrichtung 37 bzw. der Aufhängepunkt 39 bezüglich einer mittels des Rechners 41 bzw. mittels eines auf dem Rechner 41 laufenden Rechenprogramms ermittelten und in der Fig. 4 gezeigten Bahnkurve 42 bewegt.

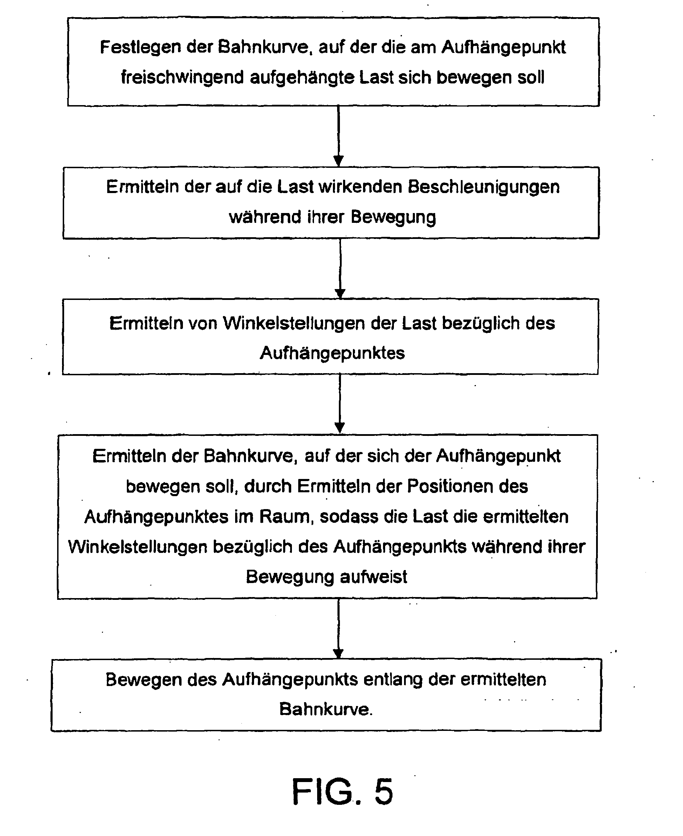

Zweck des 6-Achs Roboters 31 ist es, die freischwingende Last 38 von einem Startpunkt 43 zu einem Zielpunkt 44 entlang einer Bahnkurve 45 zu bewegen. Aufgrund der Bahnkurve 45 der Last 38 steuert der Rechner 41 bzw. das auf dem Rechner 41 laufende Rechenprogramm die Abtriebe derart an, dass sich die Haltevorrichtung 37 auf ihrer Bahnkurve 42 bewegt. Um die Bahnkurve 42 der Haltevorrichtung 37 zu erhalten, läuft im Falle des vorliegenden Ausführungsbeispiels auf dem Rechner 41 ein weiteres Rechenprogramm, das die Bahnkurve 42 der Haltevorrichtung 37 wie folgt ermittelt. Die Ermittlung der Bahnkurve 42 ist mittels eines in der Fig. 5 gezeigten Flussdiagramms zusammengefasst.

Zunächst gibt eine in den Figuren nicht näher dargestellte Person den Verlauf der Bahnkurve 45 in den Rechner 41 z.B. mittels einer Maus 46 oder einer Tastatur 47 des Rechners 41 ein. Alternativ kann die Bahnkurve 45 auch automatisch bestimmt werden. Unter einer Bahnkurve, die auch als Trajektorie bezeichnet wird, versteht man allgemein eine Ortsraumkurve, entlang der sich ein Körper bzw. dessen Schwerpunkt mit einer bestimmten ortsabhängigen Geschwindigkeit bewegt. Im Falle des vorliegenden Ausführungsbeispiels verläuft die Bahnkurve 45 der Last 38 in einer Ebene. Dies ist jedoch nicht zwingend notwendig. Die Bahnkurve 45 der Last 38 kann insbesondere auch eine nach oben oder nach unten gerichtete Bewegungskomponente aufweisen, wie dies z.B. beim Heben der Last 38 über ein nicht dargestelltes Hindernis erforderlich wäre. Somit ist die Bahnkurve 45, entlang sich die Last 38 vom Startpunkt 43 zum Zielpunkt 44 bewegen soll, festgelegt.

Anschließend berechnet das auf dem Rechner 41 laufende Rechenprogramm die Bahnkurve 42, auf der sich die Haltevorrichtung 37 bewegen soll, sodass sich die Last 38 auf ihrer Bahnkurve 45 vom Startpunkt 43 zum Zielpunkt 44 bewegt.

Dies wird im Falle des vorliegenden Ausführungsbeispiels erreicht, indem das auf dem Rechner 41 laufende Rechenprogramm zunächst die auf die Last 38 wirkenden Beschleunigungen während der Bewegung vom Startpunkt 43 zum Zielpunkt 44 der Last 38 entlang ihrer Bahnkurve 45 aufgrund der momentanen Geschwindigkeiten der Last 38 während ihrer Bewegung ermittelt. Die Beschleunigungen der Last 38 ergeben sich aus den ortsabhängigen Geschwindigkeiten der Last 38 während ihrer Bewegung entlang ihrer Bahnkurve 45 und der Erdbeschleunigung $g$.

Anschließend ermittelt das auf dem Rechner 41 laufende Rechenprogramm diejenigen Winkelstellungen $\theta$ der Last 38 bezüglich des Aufhängepunktes 39 aufgrund der ermittelten Beschleunigungen.

Im Falle des vorliegenden Ausführungsbeispiels werden die Winkelstellungen $\theta$ der Last 38 bezüglich des Aufhängepunktes 39 in einem kartesischen Koordinatensystem mit den horizontalen Koordinaten $x$ und $y$ und der vertikalen Koordinate $z$ gemäß folgender Formeln ermittelt:

$$\theta_x(t) = Arctan\left(\frac{a_x(t)}{g + a_z(t)}\right)$$

$$\theta_y(t) = Arctan\left(\frac{a_y(t)}{g + a_z(t)}\right)$$

wobei $a_x$, $a_y$ und $a_z$ die Beschleunigungen der Last 38 bezüglich der $x$-Koordinate, der $y$-Koordinate und der $z$-Koordinate und $g$ die Erdbeschleunigung sind.

Aus den ermittelten Winkelstellungen $\theta$ der Last 38 während der Bewegung der Last 38 auf ihrer Bahnkurve 45 und der Länge L des Seils 40 ermittelt danach das auf dem Rechner 41 laufende Rechenprogramm die Bahnkurve 42, auf der sich der Aufhängepunkt 39 bzw. die Haltevorrichtung 37 bewegen soll, sodass sich die Last 38 auf ihrer Bahnkurve 42 vom Startpunkt 43 zum Zielpunkt 44 bewegt.

Anschließend steuert das auf dem Rechner 41 laufende Rechenprogramm die Antriebe derart an, dass sich die Haltevorrichtung 37 bzw. der Aufhängepunkt 39 entlang der ermittelten Bahnkurve 42 bewegt.

Obwohl die vorliegende Erfindung vorstehend anhand eines bevorzugten Ausführungsbeispiels beschrieben wurde, ist diese nicht darauf beschränkt, sondern ist auf vielfältige Weise gemäß den nachfolgenden Patentansprüchen modifizierbar.

## Patentansprüche

1. Verfahren zum Bewegen einer freischwingenden Last, bei dem eine erste Bahnkurve (45) festgelegt wird, auf der eine Last (38) von einem Startpunkt (43) zu einem Zielpunkt (44) mit einer ersten ortsabhängigen Geschwindigkeit bewegt werden soll, wobei die Last (38) an einem die Last bewegenden Aufhängepunkt (39) freischwingend aufgehängt ist, **gekennzeichnet durch**

   - Ermitteln einer zweiten Bahnkurve (42), auf der sich der Aufhängepunkt (39) mit einer zweiten ortsabhängigen Geschwindigkeit derart bewegen soll, dass die Last (38) sich entlang der ersten Bahnkurve (45) mit der ersten ortsabhängigen Geschwindigkeit vom Startpunkt (43) zum Zielpunkt (44) bewegt, und
   - Bewegen des Aufhängepunkts (39), an dem die Last (38) freischwingend aufgehängt ist, entlang der ermittelten zweiten Bahnkurve (42) mit der zweiten ortsabhängigen Geschwindigkeit.

2. Verfahren nach Anspruch 1, aufweisend folgende Verfahrensschritte zum Ermitteln der zweiten Bahnkurve (42):

   - Ermitteln der auf die Last (38) wirkenden Beschleunigungen während der Bewegung vom Startpunkt (43) zum Zielpunkt (44) der Last (38) entlang der ersten Bahnkurve (45) aufgrund der momentanen Geschwindigkeiten der Last (38) während der Bewegung,
   - Ermitteln von Winkelstellungen ($\theta$) der Last (38) bezüglich des Aufhängepunktes (39) aufgrund der ermittelten Beschleunigungen, und
   - Ermitteln der zweiten Bahnkurve (42) durch Ermitteln derjenigen Positionen des Aufhängepunktes (39) im Raum, sodass die Last (38) die ermittelten Winkelstellungen (θ) bezüglich des Aufhängepunkts (39) während der Bewegung aufweist.

**3.** Verfahren nach Anspruch 2, bei dem die Winkelstellungen (θ) der Last (38) bezüglich des Aufhängepunktes (39) in einem kartesischen Koordinatensystem mit den horizontalen Koordinaten $x$ und $y$ und der vertikalen Koordinate $z$ gemäß folgender Formeln ermittelt werden:

$$\theta_x(t) = Arctan(\frac{a_x(t)}{g + a_z(t)})$$

$$\theta_y(t) = Arctan(\frac{a_y(t)}{g + a_z(t)})$$

wobei $a_x$, $a_y$ und $a_z$ die Beschleunigungen der Last (39) bezüglich der $x$-Koordinate, der $y$-Koordinate und der $z$-Koordinate und $g$ die Erdbeschleunigung sind.

**4.** Verfahren nach einem der Ansprüche 1 bis 3, bei dem die erste Bahnkurve (45) lediglich horizontale Bewegungskomponenten oder horizontale und vertikale Bewegungskomponenten bezüglich der Erdoberfläche aufweist.

**5.** Vorrichtung zum Bewegen einer freischwingenden Last, aufweisend eine Haltevorrichtung (37) zum freischwingenden Aufhängen einer Last (38) bezüglich eines Aufhängepunktes (39) und Mittel (32-36) zum Bewegen der Haltevorrichtung (37) in wenigstens drei Freiheitsgraden **gekennzeichnet durch**

- eine Eingabevorrichtung (46, 47) zum Eingeben des Verlaufs einer ersten Bahnkurve (45), auf der sich die an der Haltevorrichtung (37) freischwingend befestigte Last (38) von einem Startpunk (43) zu einem Zielpunkt (44) mit einer ersten ortsabhängigen Geschwindigkeit bewegen soll,
- eine Steuervorrichtung (41), die die Mittel (32-36) zum Bewegen der Haltevorrichtung (37) derart ansteuert, dass sich die Haltevorrichtung (37) auf einer **durch** die Steuervorrichtung (41) vorgegebenen zweiten Bahnkurve (42) mit einer zweiten ortsabhängigen Geschwindigkeit bewegt, und
- eine Rechenvorrichtung (41), die aufgrund der ersten Bahnkurve (45) den Verlauf der zweiten Bahnkurve (42) derart berechnet, dass sich die Last (38) entlang der ersten Bahnkurve (45) vom Startpunkt (43) zum Zielpunkt (44) bewegt.

**6.** Vorrichtung zum Bewegen einer freischwingenden Last, aufweisend eine Haltevorrichtung (37) zum freischwingenden Aufhängen einer Last (38) bezüglich eines Aufhängepunktes (39) und Mittel (32-36) zum Bewegen der Haltevorrichtung (37) in wenigstens drei Freiheitsgraden, **gekennzeichnet durch**

- eine Steuervorrichtung (41), die die Mittel (32-36) zum Bewegen der Haltevorrichtung (37) derart ansteuert, dass sich die Haltevorrichtung (37) auf einer **durch** die Steuervorrichtung (41) vorgegebenen zweiten Bahnkurve (42) mit einer zweiten ortsabhängigen Geschwindigkeit bewegt, und
- eine Rechenvorrichtung (41), die den Verlauf einer ersten Bahnkurve (45), auf der sich die an der Haltevorrichtung (37) mit einer ersten ortsabhängigen Geschwindigkeit freischwingend befestigte Last (38) von einem Startpunk (43) zu einem Zielpunkt (44) bewegen soll, mittels einer automatischen Bahnberechnung berechnet und die aufgrund der ersten Bahnkurve (45) den Verlauf der zweiten Bahnkurve (42) derart berechnet, dass die Last (38) entlang der ersten Bahnkurve (45) mit der ersten ortsabhängigen Geschwindigkeit vom Startpunkt (43) zum Zielpunkt (44) bewegt wird.

**7.** Vorrichtung nach Anspruch 5 oder 6, deren Rechenvorrichtung (41) derart eingerichtet ist, dass sie auf die Last (38) wirkende Beschleunigungen während der Bewegung vom Startpunkt (43) zum Zielpunkt (44) der Last (38) entlang der ersten Bahnkurve (45) aufgrund der momentanen Geschwindigkeiten der Last (38) während ihrer Bewegung entlang der ersten Bahnkurve (45) berechnet, Winkelstellungen (θ) der Last (38) bezüglich des Aufhängepunktes (39) aufgrund der berechneten Beschleunigungen ermittelt und die zweite Bahnkurve (42) berechnet durch Ermitteln derjenigen Positionen des Aufhängepunktes (39) im Raum, sodass die Last (38) die ermittelten Winkelstellungen (θ) bezüglich des Aufhängepunkts (39) während der Bewegung aufweist.

**8.** Vorrichtung nach Anspruch 7, deren Rechenvorrichtung (41) die Winkelstellungen (θ) der Last (38) bezüglich des Aufhängepunktes (39) in einem kartesischen Koordinatensystem mit den horizontalen Koordinaten $x$ und $y$ und der vertikalen Koordinate $z$ gemäß folgender Formeln ermittelt:

$$\theta_x(t) = Arctan(\frac{a_x(t)}{g + a_z(t)})$$

$$\theta_y(t) = Arctan(\frac{a_y(t)}{g + a_z(t)})$$

wobei $a_x$, $a_y$ und $a_z$ die Beschleunigungen der Last (38) bezüglich der $x$-Koordinate, der $y$-Koordinate und der $z$-Koordinate und $g$ die Erdbeschleunigung sind.

**9.** Vorrichtung nach einem der Ansprüche 5 bis 7, die derart eingerichtet ist, dass die erste Bahnkurve (45) lediglich horizontale Bewegungskomponenten oder horizontale und vertikale Bewegungskomponenten bezüglich der Erdoberfläche aufweist.

**10.** Vorrichtung nach einem der Ansprüche 5 bis 9, deren Mittel zum Bewegen der Haltevorrichtung (37) vier, fünf, sechs oder sieben Freiheitsgrade aufweisen.

**Claims**

**1.** Method for moving a free-swinging load, in which a first trajectory (45) is determined, along which a load (38) is to be moved from a starting point (43) to a target point (44) at a first site-dependent velocity, wherein the load (38) is suspended so as to swing freely on a suspension point (39) moving the load, **characterised by**

- determining a second trajectory (42) along which the suspension point (39) is to move at a second site-dependent velocity, such that the load (38) moves along the first trajectory (45) at the first site-dependent velocity from the starting point (43) to the target point (44), and
- moving the suspension point (39) on which the load (38) is suspended so as to swing freely along the determined second trajectory (42) at the second site-dependent velocity.

**2.** Method according to claim 1, comprising the following method steps for determining the second trajectory (42):

- determining accelerations acting on the load (38) during the movement from the starting point (43) to the target point (44) of the load (38) along the first trajectory (45) on the basis of the current velocities of the load (38) during the movement,
- determining angular positions (θ) of the load (38) relative to the suspension point (39) on the basis of the determined accelerations, and
- determining the second trajectory (42) by determining the positions of the suspension point (39) in space so that the load (38) comprises the determined angular positions (θ) relative to the suspension point (39) during the movement.

**3.** Method according to claim 2, in which the angular positions (θ) of the load (38) relative to the suspension point (39) are determined in a Cartesian coordinate system with horizontal coordinates $x$ and $y$ and vertical coordinate $z$ according to the following formulae:

$$\theta_x(t) = arctan\left(\frac{a_x(t)}{g + a_2(t)}\right)$$

$$\theta_y(t) = arctan\left(\frac{a_x(t)}{g + a_2(t)}\right)$$

wherein $a_x$, $a_y$ and $a_z$ are accelerations of the load (39) in relation to the $x$-coordinate, the $y$-coordinate and the $z$-coordinate, and $g$ is acceleration due to gravity.

**4.** Method according to one of claims 1 to 3, in which the first trajectory (45) comprises only horizontal movement components or horizontal and vertical movement components relative to the earth's surface.

**5.** Device for moving a free-swinging load, comprising a holding device (37) for suspending a load (38) so as to swing freely relative to a suspension point (39) and means (32-36) for moving the holding device (37) in at least three degrees of freedom, **characterised by**

- an input device (46, 47) for entering the path of a first trajectory (45), on which the free-swinging load (38) secured to the holding device (37) is to move from a starting point (43) to a target point (44) at a first site-dependent velocity,
- a control device (41) which controls the means (32-36) for moving the holding device (37), such that the holding device (37) moves on a second trajectory (42) determined by the control device (41) at a second site-dependent velocity, and
- a processor (41), which on the basis of the first trajectory (45) calculates the path of the second trajectory (42) such that the load (38) moves along the first trajectory (45) from the starting point (43) to the target point (44).

**6.** Device for moving a free-swinging load, comprising a holding device (37) for suspending a load (38) in a free-swinging manner relative to a suspension point (39) and means (32-36) for moving the holding device (37) in at least three degrees of freedom, **characterised by**

- a control device (41) which controls the means (32-36) for moving the holding device (37) such that the holding device (37) moves on a second trajectory (42) defined by the control device (41) at a second site-dependent speed, and
- a processor (41) which calculates the path of a first trajectory (45) along which the free-swinging load (38) secured to the holding device (37) should move at a first site-dependent velocity from a starting point (43) to a target point (44), by means of an automatic calculation of the path and which on the basis of the first trajectory (45) calculates the path of the second trajectory (42), such that the load (38) is moved along the first trajectory (45) with the first site-dependent velocity from the starting point (43) to the target point (44).

7. Device according to claim 5 or 6, the processor (41) of which is set up such that it calculates accelerations acting on the load (38) during the movement from the starting point (43) to the target point (44) of the load (38) along the first trajectory (45) on the basis of the current velocities of the load (38) during its movement along the first trajectory (45), determines angular positions (θ) of the load (38) relative to the suspension point (39) on the basis of the calculated accelerations and calculates the second trajectory (42) by determining the positions of the suspension point (39) in space, so that the load (38) has the determined angular positions (θ) relative to the suspension point (39) during the movement.

8. Device according to claim 7, the processor (41) of which determines the angular positions (θ) of the load (38) relative to the suspension point (39) in a Cartesian coordinate system with horizontal coordinates *x* and *y* and vertical coordinate *z*, according to the following formulae:

$$\theta_x(t)=arctan\left(\frac{a_x(t)}{g+a_z(t)}\right)$$

$$\theta_y(t)=arctan\left(\frac{a_x(t)}{g+a_z(t)}\right)$$

wherein $a_x$, $a_y$ and $a_z$ are the accelerations of the load (38) relative to the x-coordinate, the y-coordinate and the z-coordinate, and g is acceleration due to gravity.

9. Device according to any one of claims 5 to 7, which is set up such that the first trajectory (45) comprises only horizontal movement components or horizontal and vertical movement components relative to the earth's surface.

10. Device according to any one of claims 5 to 9, the means of which for moving the holding device (37) have four, five, six or seven degrees of freedom.

**Revendications**

1. Procédé pour déplacer une charge librement oscillante, dans lequel est déterminée une première trajectoire (45) sur laquelle une charge (38) doit être déplacée depuis un point de départ (43) jusqu'à un point d'arrivée (44) avec une première vitesse dépendant du lieu, la charge (38) étant suspendue à un point de suspension (39) déplaçant la charge en oscillant librement, **caractérisé par**

- détermination d'une deuxième trajectoire (42) sur laquelle le point de suspension (39) doit se déplacer avec une vitesse dépendant du lieu de telle sorte que la charge (38) se déplace le long de la première trajectoire (45) avec la première vitesse dépendant du lieu depuis le point de départ (43) jusqu'au point d'arrivée (44), et
- déplacement du point de suspension (39) sur lequel la charge (38) est suspendue en oscillant librement, le long de la deuxième trajectoire (42) déterminée avec la deuxième vitesse dépendant du lieu.

2. Procédé selon la revendication 1, présentant les étapes de procédé suivantes pour déterminer la deuxième trajectoire (42) :

- déterminer les accélérations agissant sur la charge (38) pendant le déplacement depuis le point de départ (43) jusqu'au point d'arrivée (44) de la charge (38) le long de la première trajectoire (45) sur la base des vitesses momentanées de la charge (38) pendant le déplacement,
- déterminer des positions angulaires (θ) de la charge (38) par rapport au point de suspension (39) sur la base des accélérations déterminées, et
- déterminer la deuxième trajectoire (42) en déterminant les positions du point de suspension (39) dans l'espace, de telle sorte que la charge (38) présente les positions angulaires (θ) de la charge (38) par rapport au point de suspension (39) pendant le déplacement.

3. Procédé selon la revendication 2, dans lequel les positions angulaires (θ) de la charge (38) par rapport au point de suspension (39) sont déterminées dans un système de coordonnées cartésien avec les coordonnées horizontales *x* et *y* et les coordonnées verticales *z* selon les formules suivantes :

$$\theta_x(t) = Arctan(\frac{a_x(t)}{g + a_z(t)})$$

$$\theta_y(t) = Arctan(\frac{a_y(t)}{g + a_z(t)})$$

*a*$_x$, *a*$_y$ et *a*$_z$ étant les accélérations de la charge (39) par rapport à la coordonnée *x*, à la coordonnée *y* et à la coordonnée *z, et g* étant l'accélération de la pesanteur.

4. Procédé selon l'une des revendications 1 à 3, dans lequel la première trajectoire (45) présente seulement des composantes de déplacement horizontales ou des composantes de déplacement horizontales et verticales par rapport à la surface terrestre.

5. Dispositif pour déplacer une charge librement oscillante, présentant un dispositif de retenue (37) pour la suspension librement oscillante d'une charge (38) par rapport à un point de suspension (39) et des moyens (32-36) pour le déplacement du dispositif de retenue (37) dans au moins trois degrés de liberté, **caractérisé par**

    - un dispositif d'entrée (46, 47) pour entrer le déroulement d'une première trajectoire (45) sur laquelle la charge (38) fixée librement oscillante sur le dispositif de retenue (37) doit se déplacer depuis un point de départ (43) jusqu'à un point d'arrivée (44) avec une première vitesse dépendant du lieu,
    - un dispositif de commande (41) qui pilote les moyens (32-36) de déplacement du dispositif de retenue (37) de telle sorte que le dispositif de retenue (37) se déplace sur une deuxième trajectoire (42) prédéterminée par le dispositif de commande (41) avec une deuxième vitesse dépendant du lieu, et
    - un dispositif de calcul (41) qui, sur la base de la première trajectoire (45) calcule le déroulement de la deuxième trajectoire (42) de telle sorte que la charge (38) se déplace le long de la première trajectoire (45) depuis le point de départ (43) jusqu'au point d'arrivée (44).

6. Dispositif pour déplacer une charge librement oscillante, présentant un dispositif de retenue (37) pour la suspension librement oscillante d'une charge (38) par rapport à un point de suspension (39) et des moyens (32-36) pour le déplacement du dispositif de retenue (37) dans au moins trois degrés de liberté, **caractérisé par**

    - un dispositif de commande (41) qui pilote les moyens (32-36) de déplacement du dispositif de retenue (37) de telle sorte que le dispositif de retenue (37) se déplace sur une deuxième trajectoire (42) prédéterminée par le dispositif de commande (41) avec une deuxième vitesse dépendant du lieu, et
    - un dispositif de calcul (41) qui calcule au moyen d'un calcul de trajectoire automatique le déroulement d'une première trajectoire (45) sur laquelle la charge (38) fixée en oscillant librement avec une première vitesse en fonction du lieu depuis un point de départ (43) jusqu'à un point d'arrivée (44), et qui sur la base de la première trajectoire (45), calcule le déroulement de la deuxième trajectoire (42) de telle sorte que la charge (38) se déplace le long de la première trajectoire (45) avec la première vitesse dépendant du lieu depuis le point de départ (43) jusqu'au point d'arrivée (44).

7. Dispositif selon la revendication 5 ou 6, dont le dispositif de calcul (41) est conçu de telle sorte qu'il calcule des accélérations agissant sur la charge (38) pendant le déplacement de la charge (38) depuis le point de départ (43) jusqu'au point d'arrivée (44) le long de la première trajectoire (45) sur la base des vitesses momentanées de la charge (38) pendant son déplacement le long de la première trajectoire (45), qu'il détermine des positions angulaires (θ) de la charge (38) par rapport au point de suspension (39) sur la base des accélération calculées et qu'il calcule la deuxième trajectoire (42) en déterminant les positions du point de suspension (39) dans l'espace, de telle sorte que la charge (38) présente les positions angulaires (θ) par rapport au point de suspension (39) pendant le déplacement.

8. Dispositif selon la revendication 7, dont le dispositif de calcul (41) détermine les positions angulaires (θ) de la charge (38) par rapport au point de suspension (39) dans un système de coordonnées cartésien avec les coordonnées horizontales *x* et *y* et les coordonnées verticales *z* selon les formules suivantes :

$$\theta_x(t) = Arctan(\frac{a_x(t)}{g + a_z(t)})$$

$$\theta_y(t) = Arctan(\frac{a_y(t)}{g + a_z(t)})$$

$a_x$, $a_y$ et $a_z$ étant les accélérations de la charge (39) par rapport à la coordonnée $x$, à la coordonnée $y$ et à la coordonnée $z$ et $g$ étant l'accélération de la pesanteur.

9. Dispositif selon l'une des revendications 5 à 7, qui est conçu de telle sorte que la première trajectoire (45) présente seulement des composantes de déplacement horizontales ou des composantes de déplacement horizontales et verticales par rapport à la surface terrestre.

10. Dispositif selon l'une des revendications 5 à 9, dont les moyens pour déplacer le dispositif de retenue (37) présentent quatre, cinq, six ou sept degrés de liberté.

# FIG. 1

# FIG. 2

FIG. 3

FIG. 4

Festlegen der Bahnkurve, auf der die am Aufhängepunkt freischwingend aufgehängte Last sich bewegen soll

↓

Ermitteln der auf die Last wirkenden Beschleunigungen während ihrer Bewegung

↓

Ermitteln von Winkelstellungen der Last bezüglich des Aufhängepunktes

↓

Ermitteln der Bahnkurve, auf der sich der Aufhängepunkt bewegen soll, durch Ermitteln der Positionen des Aufhängepunktes im Raum, sodass die Last die ermittelten Winkelstellungen bezüglich des Aufhängepunkts während ihrer Bewegung aufweist

↓

Bewegen des Aufhängepunkts entlang der ermittelten Bahnkurve.

# FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11240687 A
- DE 4238795 A1
- DE 10223670 A1
- JP 11301969 A
- EP 0562124 A1